# EUROPEAN PATENT APPLICATION

(11) **EP 1 914 621 A1**
(43) Date of publication of application: **23.04.2008**
(21) Application number: 07020334.4
(22) Date of filing: 17.10.2007
(51) Int. Cl.: G06F 3/03, G06F 3/048

(54) **Executing an operation associated with a region proximate a graphic element on a surface**

(30) Priority: 18.10.2006 US 583311
(71) Applicant: Leapfrog Enterprises, Inc., Emeryville, CA 94608-1070 (US)
(72) Inventor: Chou, Dao-Liang, Berkeley California 94702 (US); Baldizikowski, Steve, Emeryville California (US); Lavoie, Frank A., El Cerrito California (US)
(74) Representative: Ebner von Eschenbach, Jennifer

(57) **Abstract**

Executing an operation associated with a region proximate a graphic element on a surface. A user interaction with a region proximate a graphic element on a surface is detected, where the surface comprises a plurality of regions proximate the graphic element. Responsive to the user interaction, an operation associated with the region is executed.

## Description

### BACKGROUND

Computing devices typically use menu structures to organize applications and information for allowing a user to easily access desired applications and/or information. The navigation of a menu structure becomes increasingly complex where the computing device does not include a display screen for displaying the menu structure. One such computing device that does not include a display screen is a pen computer including a writing instrument, an optical camera and a speaker for providing audio feedback. A user can create and interact with content on media such as paper with the writing instrument.

In order to access applications and information on a pen computer, a user interacts with a graphic element on media and receives audio feedback. Conventional pen computer menu navigation is limited to very simple menu structures, requiring a user constantly create new graphic element representing a new menu. Moreover, the number of menus is limited because each graphic element requires a portion of the limited memory of the pen computer. Each time a new graphic element representing a menu is drawn, more memory must be allocated. Furthermore, the number of different graphic elements representing menus that can be drawn is limited to the availability of simple and logical letter combinations and having to draw many menu boxes impairs usability.

### SUMMARY

Accordingly, a need exists for menu navigation in a pen computer that provides support for complex menu structures. A need also exists for menu navigation in a pen computer that satisfies the above need and does not require substantial amounts of memory. A need also exists for menu navigation in a pen computer that satisfies the above needs and is not limited to the availability of simple and logical letter combinations and provides improved usability.

Various embodiments of the present invention, executing an operation associated with a region proximate a graphic element on a surface, are described herein. In one embodiment, a computing device implemented method is provided where a user interaction with a region proximate a first graphic element on a surface is detected. The surface includes a plurality of regions proximate the first graphic element. In one embodiment, the first graphic element is a user written graphic element. In another embodiment, the first graphic element is pre-printed on the surface. In one embodiment, the user interaction includes a writing instrument tapping the region. In another embodiment, the user interaction includes a writing instrument contacting the region and remaining in contact with the region for a predetermined period of time. In one embodiment, the plurality of regions includes four regions wherein each region of the plurality of regions is located in a different quadrant proximate the graphic element, wherein each region is associated with a different operation.

An operation associated with the region proximate the first graphic element is executed responsive to the user interaction. In one embodiment, executing the operation associated with the region includes navigating through a menu structure in a direction indicated by the region, wherein different regions of said plurality of regions are associated with different directions of navigation. In one embodiment, a current location in the menu structure is audibly rendered, also referred to herein as announced, as a result of the navigating. In another embodiment, executing the operation associated with the region includes executing an action. In another embodiment executing the operation associated with the region includes rendering an audible message. In one embodiment, the audible message is an instruction directing a user to draw a second graphic element on the surface.

In another embodiment, the present invention provides a computing device including a writing instrument for interacting with a surface, an optical detector for detecting user interactions between the writing instrument and the surface, and a processor communicatively coupled to the optical detector. The processor is for detecting a user interaction with a region proximate a first graphic element on the surface, where the surface includes a plurality of regions proximate the first graphic element, and responsive to the user interaction, executes an operation associated with the region proximate said first graphic element.

Broadly this writing discloses executing an operation associated with a region proximate a graphic element on a surface. Less broadly, this writing discloses executing an operation associated with a region proximate a graphic element on a surface. A user interaction with a region proximate a graphic element on a surface is detected, where the surface comprises a plurality of regions proximate the graphic element. Responsive to the user interaction, an operation associated with the region is executed.

### BRIEF DESCRIPTION OF THE DRAWINGS

The accompanying drawings, which are incorporated in and form a part of this specification, illustrate embodiments of the invention and, together with the description, serve to explain the principles of the invention:
Figure 1 is a block diagram of a device upon which embodiments of the present invention can be implemented.
Figure 2 illustrates a portion of an item of encoded media upon which embodiments of the present invention can be implemented.
Figure 3 illustrates an example of an item of encoded media with added content in an embodiment according to the present invention.
Figures 4A and 4B illustrate examples of graphic elements having proximate interactive regions in an embodiment according to the present invention.
Figure 5 illustrates an exemplary menu structure in an embodiment according to the present invention.
Figure 6 is a flowchart of one embodiment of a method in which an operation associated with a region proximate a graphic element on a surface is executed according to the present invention.
The drawings referred to in this description should not be understood as being drawn to scale except if specifically noted.

### DETAILED DESCRIPTION

Reference will now be made in detail to various embodiments of the invention, executing an operation associated with a region proximate a graphic element on a surface, examples of which are illustrated in the accompanying drawings. While the invention will be described in conjunction with these embodiments, it is understood that they are not intended to limit the invention to these embodiments. On the contrary, the invention is intended to cover alternatives, modifications and equivalents, which may be included within the spirit and scope of the invention as defined by the appended claims. Furthermore, in the following detailed description of the invention, numerous specific details are set forth in order to provide a thorough understanding of the invention. However, it will be recognized by one of ordinary skill in the art that the invention may be practiced without these specific details. In other instances, well known methods, procedures, components, and circuits have not been described in detail as not to unnecessarily obscure aspects of the invention.

In the following detailed description of the present invention, numerous specific details are set forth in order to provide a thorough understanding of the present invention. However, it will be recognized by one skilled in the art that the present invention may be practiced without these specific details or with equivalents thereof. In other instances, well-known methods, procedures, components, and circuits have not been described in detail as not to unnecessarily obscure aspects of the present invention.

Some portions of the detailed descriptions, which follow, are presented in terms of procedures, steps, logic blocks, processing, and other symbolic representations of operations on data bits that can be performed on computer memory. These descriptions and representations are the means used by those skilled in the data processing arts to most effectively convey the substance of their work to others skilled in the art. A procedure, computer executed step, logic block, process, etc., is here, and generally, conceived to be a self-consistent sequence of steps or instructions leading to a desired result. The steps are those requiring physical manipulations of physical quantities. Usually, though not necessarily, these quantities take the form of electrical or magnetic signals capable of being stored, transferred, combined, compared, and otherwise manipulated in a computer system. It has proven convenient at times, principally for reasons of common usage, to refer to these signals as bits, values, elements, symbols, characters, terms, numbers, or the like.

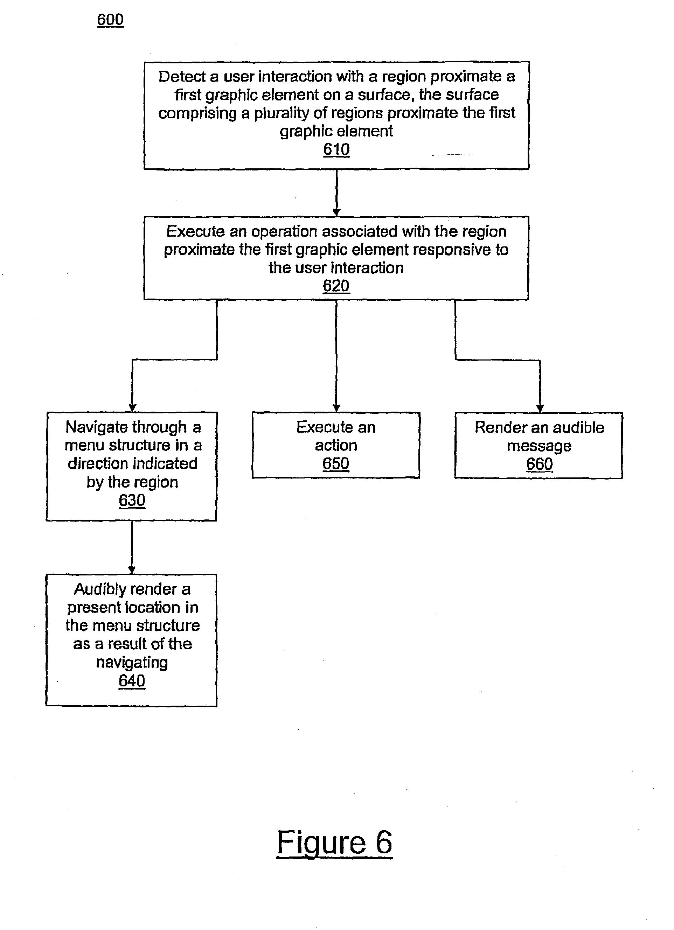

It should be borne in mind, however, that all of these and similar terms are to be associated with the appropriate physical quantities and are merely convenient labels applied to these quantities. Unless specifically stated otherwise as apparent from the following discussions, it is appreciated that throughout the present invention, discussions utilizing terms such as "detecting" or "executing" or "navigating" or "rendering" or "sensing" or "scanning" or "storing" or "defining" or "associating" or "receiving" or "selecting" or "generating" or "creating" or "decoding" or "invoking" or "accessing" or "retrieving" or "identifying" or "prompting" or the like, refer to the actions and processes of a computer system (e.g., flowchart 600 of Figure 6), or similar electronic computing device, that manipulates and transforms data represented as physical (electronic) quantities within the computer system's registers and memories into other data similarly represented as physical quantities within the computer system memories or registers or other such information storage, transmission or display devices.

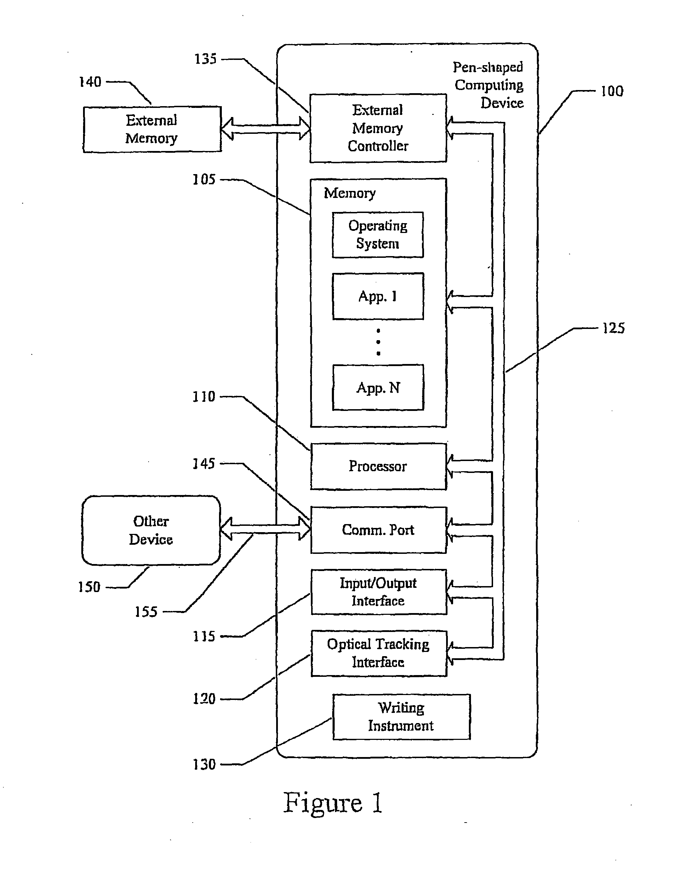

Figure 1 is a block diagram of a computing device 100 upon which embodiments of the present invention can be implemented. In general, device 100 may be referred to as a pen-shaped computer system or an optical device, or more specifically as an optical reader, optical pen, digital pen or pen computer. In general, device 100 may have a form factor similar to a pen, stylus or the like.

Devices such as optical readers or optical pens emit light that reflects off a surface to a detector or imager. As the device is moved relative to the surface (or vice versa), successive images are rapidly captured. By analyzing the images, movement of the optical device relative to the surface can be tracked.

According to embodiments of the present invention, device 100 is used with a sheet of "digital paper" on which a pattern of markings - specifically, very small dots - are printed. Digital paper may also be referred to herein as encoded media or encoded paper. In one embodiment, the dots are printed on paper in a proprietary pattern with a nominal spacing of about 0.3 millimeters (0.01 inches). In one such embodiment, the pattern consists of 669,845,157,115,773,458,169 dots, and can encompass an area exceeding 4.6 million square kilometers, corresponding to about 73 trillion letter-size pages. This "pattern space" is subdivided into regions that are licensed to vendors (service providers) - each region is unique from the other regions. In essence, service providers license pages of the pattern that are exclusively theirs to use. Different parts of the pattern can be assigned different functions.

An optical pen such as device 100 essentially takes a snapshot of the surface of the digital paper. By interpreting the positions of the dots captured in each snapshot, device 100 can precisely determine its position on the page in two dimensions. That is, in a Cartesian coordinate system, for example, device 100 can determine an x-coordinate and a y-coordinate corresponding to the position of the device relative to the page. The pattern of dots allows the dynamic position information coming from the optical sensor/detector in device 100 to be processed into signals that are indexed to instructions or commands that can be executed by a processor in the device.

In the example of Figure 1, the device 100 includes system memory 105, a processor 110, an input/output interface 115, an optical tracking interface 120, and one or more buses 125 in a housing, and a writing instrument 130 that projects from the housing. The system memory 105, processor 110, input/output interface 115 and optical tracking interface 120 are communicatively coupled to each other by the one or more buses 125.

The memory 105 may include one or more well known computer-readable media, such as static or dynamic read only memory (ROM), random access memory (RAM), flash memory, magnetic disk, optical disk and/or the like. The memory 105 may be used to store one or more sets of instructions and data that, when executed by the processor 110, cause the device 100 to perform the functions described herein.

The device 100 may further include an external memory controller 135 for removably coupling an external memory 140 to the one or more buses 125. The device 100 may also include one or more communication ports 145 communicatively coupled to the one or more buses 125. The one or more communication ports can be used to communicatively couple the device 100 to one or more other devices 150. The device 110 may be communicatively coupled to other devices 150 by a wired communication link and/or a wireless communication link 155. Furthermore, the communication link may be a point-to-point connection and/or a network connection.

The input/output interface 115 may include one or more electro-mechanical switches operable to receive commands and/or data from a user. The input/output interface 115 may also include one or more audio devices, such as a speaker, a microphone, and/or one or more audio jacks for removably coupling an earphone, headphone, external speaker and/or external microphone. The audio device is operable to output (e.g., audibly render or announce) audio content and information and/or receiving audio content, information and/or instructions from a user. The input/output interface 115 may include video devices, such as a liquid crystal display (LCD) for displaying alphanumeric and/or graphical information and/or a touch screen display for displaying and/or receiving alphanumeric and/or graphical information.

The optical tracking interface 120 includes a light source or optical emitter and a light sensor or optical detector. The optical emitter may be a light emitting diode (LED) and the optical detector may be a charge coupled device (CCD) or complementary metal-oxide semiconductor (CMOS) imager array, for example. The optical emitter illuminates a surface of a media or a portion thereof, and light reflected from the surface is received at the optical detector.

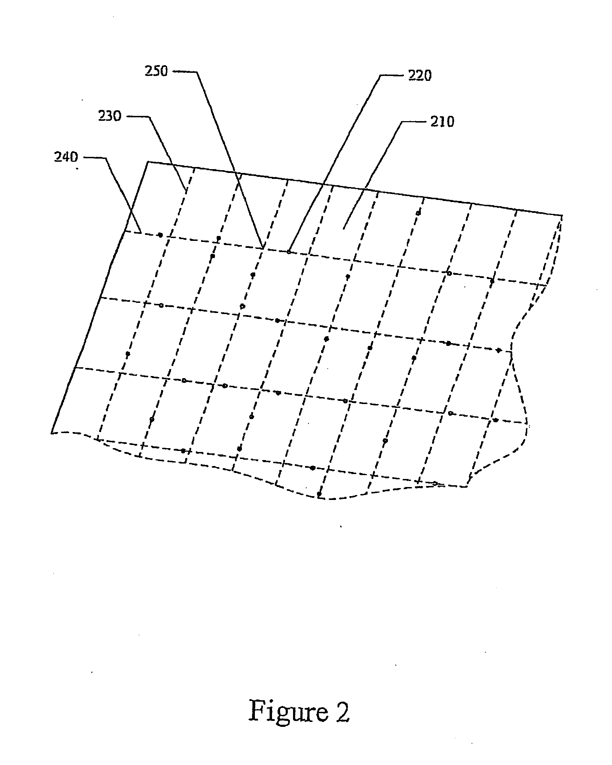

The surface of the media may contain a pattern detectable by the optical tracking interface 120. Referring now to Figure 2, an example is shown of an item of encoded media 210, upon which embodiments according to the present invention can be implemented. Media 210 may be a sheet of paper, although surfaces consisting of materials other than, or in addition to, paper may be used. Media 210 may be a flat panel display screen (e.g., an LCD) or electronic paper (e.g., reconfigurable paper that utilizes electronic ink). Also, media 210 may or may not be flat. For example, media 210 may be embodied as the surface of a globe. Furthermore, media 210 may be smaller or larger than a conventional (e.g., 8.5x11-inch) page of paper. In general, media 210 can be any type of surface upon which markings (e.g., letters, numbers, symbols, etc.) can be printed or otherwise deposited, or media 210 can be a type of surface wherein a characteristic of the surface changes in response to action on the surface by device 100.

In one implementation; the media 210 is provided with a coding pattern in the form of optically readable position code that consists of a pattern of dots. As the writing instrument 130 and the optical tracking interface 120 move together relative to the surface, successive images are captured. The optical tracking interface 120 (specifically, the optical detector) can take snapshots of the surface 100 times or more a second. By analyzing the images, position on the surface and movement relative to the surface of the media can be tracked.

In one implementation, the optical detector fits the dots to a reference system in the form of a raster with raster lines 230 and 240 that intersect at raster points 250. Each of the dots 220 is associated with a raster point. For example, the dot 220 is associated with raster point 250. For the dots in an image, the displacement of a dot 220 from the raster point 250 associated with the dot 220 is determined. Using these displacements, the pattern in the image is compared to patterns in the reference system. Each pattern in the reference system is associated with a particular location on the surface. Thus, by matching the pattern in the image with a pattern in the reference system, the position of the device 100 (Figure 1) relative to the surface can be determined.

With reference to Figures 1 and 2, by interpreting the positions of the dots 220 captured in each snapshot, the operating system and/or one or more applications executing on the device 100 can precisely determine the position of the device 100 in two dimensions. As the writing instrument and the optical detector move together relative to the surface, the direction and distance of each movement can be determined from successive position data.

In addition, different parts of the pattern of markings can be assigned different functions, and software programs and applications may assign functionality to the various patterns of dots within a respective region. Furthermore, by placing the optical detector in a particular position on the surface and performing some type of actuating event, a specific instruction, command, data or the like associated with the position can be entered and/or executed. For example, the writing instrument 130 may be mechanically coupled to an electro-mechanical switch of the input/output interface 115. Therefore, double-tapping substantially the same position can cause a command assigned to the particular position to be executed.

The writing instrument 130 of Figure 1 can be, for example, a pen, pencil, marker or the like, and may or may not be retractable. In one or more instances, a user can use writing instrument 130 to make strokes on the surface, including letters, numbers, symbols, figures and the like. These user-produced strokes can be captured (e.g., imaged and/or tracked) and interpreted by the device 100 according to their position on the surface on the encoded media. The position of the strokes can be determined using the pattern of dots on the surface.

A user, in one implementation, uses the writing instrument 130 to create a character (e.g., an "M") at a given position on the encoded media. The user may or may not create the character in response to a prompt from the computing device 100. In one implementation, when the user creates the character, device 100 records the pattern of dots that are uniquely present at the position where the character is created. The computing device 100 associates the pattern of dots with the character just captured. When computing device 100 is subsequently positioned over the "M," the computing device 100 recognizes the particular pattern of dots associated therewith and recognizes the position as being associated with "M." In effect, the computing device 100 recognizes the presence of the character using the pattern of markings at the position where the character is located, rather then by recognizing the character itself.

The strokes can instead be interpreted by the device 100 using optical character recognition (OCR) techniques that recognize handwritten characters. In one such implementation, the computing device 100 analyzes the pattern of dots that are uniquely present at the position where the character is created (e.g., stroke data). That is, as each portion (stroke) of the character "M" is made, the pattern of dots traversed by the writing instrument 130 of device 100 are recorded and stored as stroke data. Using a character recognition application, the stroke data captured by analyzing the pattern of dots can be read and translated by device 100 into the character "M." This capability is useful for application such as, but not limited to, text-to-speech and phoneme-to-speech synthesis.

In another implementation, a character is associated with a particular command. For example, a user can write a character composed of a circled "M" that identifies a particular command, and can invoke that command repeatedly by simply positioning the optical detector over the written character. In other words, the user does not have to write the character for a command each time the command is to be invoked; instead, the user can write the character for a command one time and invoke the command repeatedly using the same written character.

In another implementation, the encoded paper may be preprinted with one or more graphics at various locations in the pattern of dots. For example, the graphic may be a preprinted graphical representation of a button. The graphic lies over a pattern of dots that is unique to the position of the graphic. By placing the optical detector over the graphic, the pattern of dots underlying the graphics are read (e.g., scanned) and interpreted, and a command, instruction, function or the like associated with that pattern of dots is implemented by the device 100. Furthermore, some sort of actuating movement may be performed using the device 100 in order to indicate that the user intends to invoke the command, instruction, function or the like associated with the graphic.

In yet another implementation, a user identifies information by placing the optical detector of the device 100 over two or more locations. For example, the user may place the optical detector over a first location and then a second location to specify a bounded region (e.g., a box having corners corresponding to the first and second locations). The first and second locations identify the information within the bounded region. In another example, the user may draw a box or other shape around the desired region to identify the information. The content within the region may be present before the region is selected, or the content may be added after the bounded region is specified.

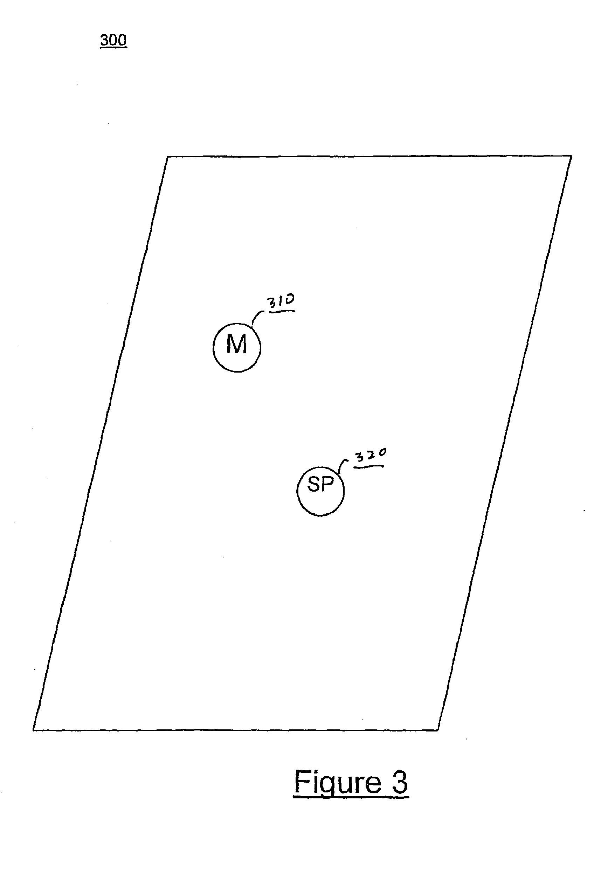

Figure 3 illustrates an example of an item of encoded media 300 in an embodiment according to the present invention. Media 300 is encoded with a pattern of markings (e.g., dots) that can be decoded to indicate unique positions on the surface of media 300, as discussed above (e.g., Figure 2).

In the example of Figure 3, graphic element 310 is located on the surface of media 300. A graphic element may also be referred to as an icon. In one embodiment, graphic element 310 is user written, e.g., written by a user using writing instrument 130. In another embodiment, graphic element 310 is preprinted on media 300. It should be appreciated that there may be more than one graphic element on media 300, e.g., graphic element 320. Associated with graphic element 310 is a particular function, instruction, command or the like. As described previously herein, underlying the region covered by graphic element 310 is a pattern of markings (e.g., dots) unique to that region.

In one embodiment, a user interacts with graphic element 310 by placing the optical detector of device 100 (Figure 1) anywhere within the region encompassed by graphic element 310 such that a portion of the underlying pattern of markings sufficient to identify that region is sensed and decoded, and the associated operation or function, etc., may be invoked. In general, device 100 is simply brought in contact with any portion of the region encompassed by graphic element 310 (e.g., element 310 is tapped with device 100) to invoke the corresponding function, etc. It should be appreciated that other interactions with graphic element 310, such as double-tapping or remaining in contact with graphic element 310 for a predetermined period of time, e.g., 0.5 seconds, also referred to herein as tapping and holding.

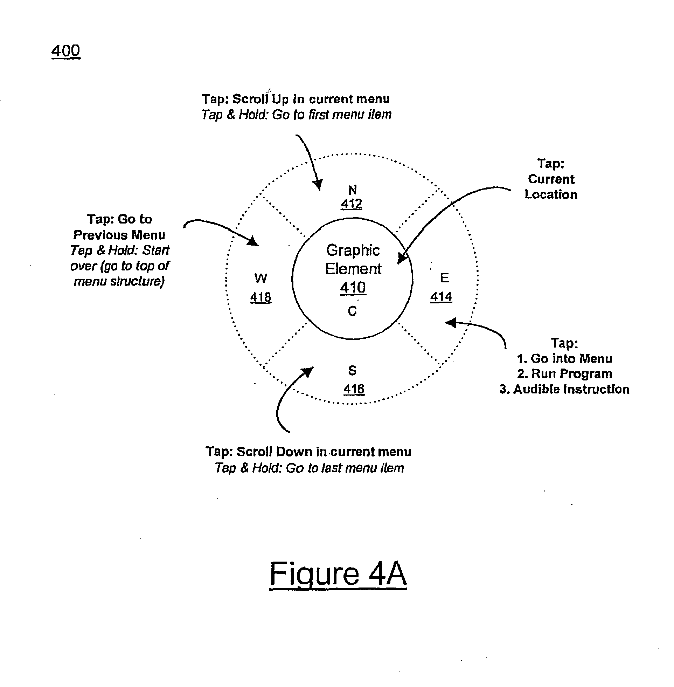

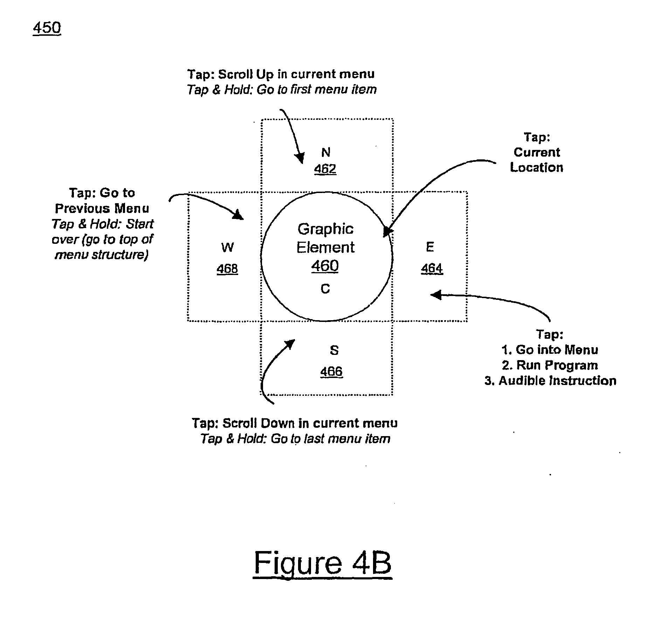

In one embodiment, a user can activate operations associated with a single graphic element by interacting with different regions proximate the graphic element. Figures 4A and 4B illustrate examples of graphic elements having proximate interactive regions in an embodiment according to the present invention.

With reference to Figure 4A, media 400 is shown including graphic element 410 located thereon. It should be appreciated that graphic element 410 may be user written or pre-printed. As described above, interacting with graphic element 410 allows a user to execute an operation or function. Media 400 also includes a plurality of regions proximate graphic element 410. As shown in Figure 4A, media 400 includes regions 412, 414, 416 and 418. It should be appreciated that regions 412, 414, 416 and 418 are defined by their respective positions relative graphic element 410. While four regions are shown in Figures 4A and 4B, it should be appreciated that a graphic element can have any number of associated proximate regions, and is not limited to the described embodiments. For purposes of clarity in the present description, regions 412, 414, 416 and 418 may also be referred to by their respective compass locations, north (N), east (E), south (S) and west (W), respectively. Also, graphic element 410 is also referred to in the present description as center (C).

As shown, regions 412, 414, 416 and 418 are delineated by dotted lines. These dotted lines are only provided for purposes of explanation, and are not necessary for implementing the described embodiments. It should be appreciated that in various embodiments the region delineations are not visible. The regions are defined relative to graphic element 410. It should be appreciated that the regions proximate graphic element 410 can be any size or shape, so long as the regions do not overlap each other. Regions 412, 414, 416 and 418 are located in different quadrants proximate graphic element 410. It should be appreciated that in various embodiments the regions may overlap graphic element 410.

With reference to Figure 4B, media 450 including graphic element 460 and regions 462, 464, 466 and 468 proximate graphic element 460 is shown. Regions 462, 464, 466 and 468 are rectangular shaped. As described above, it should be appreciated that in various embodiments the region delineations are not visible. Moreover, it should be appreciated that the operation of device 100 interacting with graphic element 460 and regions 462, 464, 466 and 468 is similar to that described below in accordance with graphic element 410 and regions 412, 414, 416 and 418, respectively, and is not repeated herein for purposes of brevity and clarity.

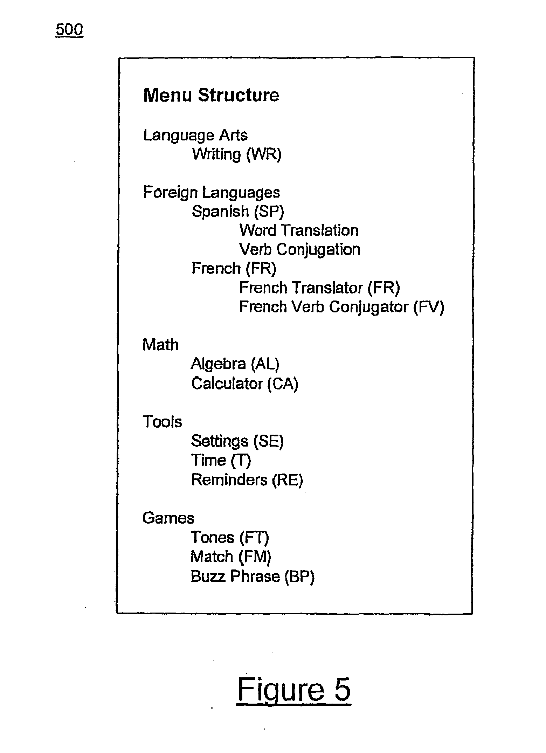

Returning to Figure 4A, in one embodiment, graphic element 410 is a menu element allowing a user to navigate a menu structure by interacting with regions 412, 414, 416 and 418. Figure 5 illustrates an exemplary menu structure 500 in an embodiment according to the present invention. Each level of indentation shown in menu structure 500 illustrates a different level of menu. For example, the main menu layer of menu structure 500 includes: Language Arts, Foreign Languages, Math, Tools and Games. Each item of the main menu layer includes at least one sub-menu. For example, the Foreign Languages sub-menu includes: Spanish and French. Similarly, the Tools sub-menu includes: Settings, Time and Reminders. It should be appreciated that menu structure 500 is exemplary, and can include any number of items and sub-menus.

Referring again to Figure 4A, a user interacting with regions 412, 414, 416 and 418 proximate graphic element 410 may navigate through a menu structure such as menu structure 500. Also, different forms of interaction, e.g., tapping or tapping and holding, may also provide different forms of navigation.

In one embodiment, tapping on region 412 with device 100 (e.g., with writing instrument 130 of device 100) scrolls up in a current menu and audibly renders (e.g., at input/output interface 115) the previous menu item in the current menu. For example, with reference to menu structure 500, if the current item is Math, tapping on region 418 navigates to and announces the menu item Foreign Languages. In one embodiment, if the current item is the first menu item, tapping on region 412 repeats the first menu item. In another embodiment, if the current menu item is the first menu item, tapping on region 412 scrolls to and announces the last menu item in the current menu, e.g., loops to the last menu item.

Tapping on region 416 scrolls down in a current menu and audibly renders the next menu item in the current menu. For example, with reference to menu structure 500, if the current item is Math, tapping on region 416 navigates to and announces the menu item Tools. In one embodiment, if the current item is the last menu item, tapping on region 416 repeats the announcement of the first menu item. In another embodiment, if the current menu item is the last menu item, tapping on region 416 scrolls to and announces the first menu item in the current menu, e.g., loops to the first menu item.

In one embodiment, tapping and holding on region 412 navigates directly to the first item in the current menu and audibly renders the first menu item in the current menu. Tapping and holding on region 416 navigates directly to the last item in the current menu and audibly renders the last menu item in the current menu.

In one embodiment, tapping on region 418 with device 100 returns to the previous menu and announces the menu item in the previous menu that was selected to get to the current item. For example, with reference to menu structure 500, if the current item is Algebra, tapping on region 41B navigates to and announces the menu item Math.

In one embodiment, tapping and holding on region 418 with device 100 restarts all menu navigation by retiring to the starting point for the menu structure and announces the starting point. For example, with reference to menu structure 500, electronic device will announce "Language Arts" when a user taps and holds region 418.

Tapping on region 414 with device 100 executes an operation dependent on the current menu item. In one embodiment, tapping on region 414 goes into and announces a sub-menu. For example, with reference to menu structure 500, if the current item is Math, tapping on region 414 navigates to and announces Algebra, the first item in the Math sub-menu. In another embodiment, tapping on region 414 executes an action for launching application associated with the current menu Item. For example, with reference to menu structure 500, if the current item is Algebra, tapping on region 414 executes the action of launching the Algebra application.

In another embodiment, tapping on region 414 audibly instructs a user to draw and interact with a new graphic element. For example, with reference to menu structure 500, if the current item is Spanish, tapping on region 414 causes an instruction for a user to draw a new graphic element, "SP". Directing a user to draw new graphic elements at various locations in a menu structure allows for easy navigation by limiting the overall size of any one menu structure. Moreover, it should be appreciated that the new graphic element may be a menu item or an application item.

Interacting with the graphic element itself also may be used to facilitate menu navigation. In one embodiment, tapping on graphic element 410 announces the current location in the current menu structure. This allows a user to recall their current location if the user gets lost in the menu structure.

Figure 6 is a flowchart 600 of one embodiment of a method in which an operation associated with a region proximate a graphic element on a surface is executed according to the present invention. In one embodiment, with reference also to Figure 1, flowchart 600 can be implemented by device 100 as computer-readable program instructions stored in memory 105 and executed by processor 110. Although specific steps are disclosed in Figure 6, such steps are exemplary. That is, the present invention is well suited to performing various other steps or variations of the steps recited in Figure 6.

At step 610, a user interaction with a region proximate a first graphic element on a surface, e.g., a region proximate graphic element 310 of Figure 3, is detected. The surface, also referred to herein as media, includes a plurality of regions proximate the first graphic element. In one embodiment, the first graphic element is a user written graphic element. In another embodiment, the first graphic element is pre-printed on the surface. In one embodiment, the user interaction includes a writing instrument tapping the region. In another embodiment, the user interaction includes a writing instrument contacting the region and remaining in contact with the region for a predetermined period of time. In one embodiment, plurality of regions includes four regions, e.g., regions 412, 414, 416 and 418 proximate graphic element 410, wherein each region of the plurality of regions is located in a different quadrant proximate said the graphic element, wherein each region is associated with a different operation.

At step 620, an operation associated with the region proximate the first graphic element is executed responsive to the user interaction.

In one embodiment, as shown at step 630, executing the operation associated with the region includes navigating through a menu structure in a direction Indicated by the region, wherein different regions of said plurality of regions are associated with different directions of navigation. For example, tapping on region 412 scrolls up in the current menu, tapping on region 416 scrolls down in the current menu, and tapping on region 418 goes up a level to the previous menu. In one embodiment, tapping on region 414 goes into a sub-menu of the current menu. At step 640, a current location in the menu structure is audibly rendered, also referred to herein as announced, as a result of the navigating.

In another embodiment, as shown at step 650, executing the operation associated with the region includes executing an action. For example, with reference to Figure 5, a user taps on the E region of a graphic element after the Algebra menu item is announced. In response to this interaction, device 100 executes the action of launching the Algebra application.

In another embodiment, as shown at step 660, executing the operation associated with the region includes rendering an audible message. In one embodiment, the audible message is an instruction directing a user to draw a second graphic element on the surface. For example, with reference to Figures 3 and 5, a user is navigating a menu structure 500 associated with graphic element 310. The user taps on the E region of graphic element 310 after the Spanish menu item is announced. In response to this interaction, device 100 audibly renders an instruction for a user to draw and interact with a new graphic element "SP," shown as graphic element 320.

Accordingly, a need exists for menu navigation in a pen computer that provides support for complex menu structures. A need also exists for menu navigation in a pen computer that satisfies the above need and does not require substantial amounts of memory. A need also exists for a menu navigation in a pen computer that satisfies the above needs and is not limited to the availability of simple and logical letter combinations.

Various embodiments of menu navigation in a pen computer in accordance with the present invention are described herein. In one embodiment, the present invention provides a graphic element and a plurality of regions proximate the graphic element. Interacting with different regions executes different operations associated with the graphic element. Embodiments of the present invention provide for complex menu structures without requiring substantial amounts of memory. Furthermore, embodiments of the present invention provide for logical organization of a menu structure that supports complex applications.

Various embodiments of the invention, executing an operation associated with a region proximate a graphic element on a surface, are thus described. While the present invention has been described in particular embodiments, it should be appreciated that the invention should not be construed as limited by such embodiments, but rather construed according to the below claims.

## Claims

1. A computing device implemented method comprising:
detecting a user interaction with a region proximate a first graphic element on a surface, said surface comprising a plurality of regions proximate said first graphic element; and
responsive to said user interaction, executing an operation associated with said region proximate said first graphic element.

2. The method as recited in Claim 1, wherein said executing said operation associated with said region comprises navigating through a menu structure in a direction indicated by said region, wherein different regions of said plurality of regions are associated with different directions of navigation.

3. The method as recited in Claim 2, further comprising audibly rendering a present location in said menu structure as a result of said navigating.

4. The method as recited in Claim 1, wherein said executing said operation associated with said region comprises rendering an audible message.

5. The method as recited in Claim 4, wherein said audible message is an instruction directing a user to draw a second graphic element on said surface.

6. The method as recited in Claim 1, wherein said executing said operation associated with said region comprises executing an action.

7. The method as recited in Claim 1, wherein said user interaction comprises a writing instrument tapping said region.

8. The method as recited in Claim 1, wherein said user interaction comprises a writing instrument contacting said region and remaining in contact with said region for a predetermined period of time.

9. The method as recited in Claim 1, wherein said plurality of regions comprises four regions, wherein each region of said plurality of regions is located in a different quadrant proximate said first graphic element, wherein each region is associated with a different operation.

10. The method as recited in Claim 1, wherein said first graphic element is a user written graphic element

11. A computing device comprising:
a writing instrument for Interacting with a surface;
an optical detector for detecting user interactions between said writing instrument and said surface; and
a processor communicatively coupled to said optical detector, said processor for detecting a user interaction with a region proximate a first graphic element on said surface, said surface comprising a plurality of regions proximate said first graphic element, and responsive to said user interaction, executing an operation associated with said region proximate said first graphic element.

12. The computing device as recited in Claim 11, wherein said operation comprises navigating through a menu structure of said computing device in a direction indicated by said region, wherein different regions of said plurality of regions are associated with different directions of navigation.

13. The computing device as recited in Claim 12, further comprising an audio output interface, wherein said processor is for directing said audio output interface to audibly render a present location in said menu structure as a result of said navigating.

14. The computing device as recited in Claim 11, further comprising an audio output interface, wherein said operation comprises directing said audio output interface to render an audible message.

15. The computing device as recited in Claim 14, wherein said audible message is an instruction directing a user to draw a second graphic element on said surface.

16. The computing device as recited in Claim 11, wherein said operation comprises executing an action.

17. The computing device as recited in Claim 11, wherein said user interaction comprises said writing instrument tapping said region.

18. The computing device as recited in Claim 11, wherein said user interaction comprises said writing instrument contacting said region and remaining in contact with said region for a predetermined period of time.

19. The computing device as recited in Claim 11, wherein said plurality of regions comprises four regions, wherein each region of said plurality of regions is located in a different quadrant proximate said first graphic element, wherein each region is associated with a different operation.

20. One or more computing device readable media for storing instructions that when executed by one or more processors perform a process comprising:
detecting a user interaction by a writing instrument of a computing device with a region proximate a first graphic element on a surface, said surface comprising a plurality of regions proximate said first graphic element; and
responsive to said user interaction, executing an operation associated with said region.

21. The one or more computing device readable media as recited in Claim 20, wherein said executing said operation associated with said region comprises navigating through a menu structure in a direction indicated by said region, wherein different regions of said plurality of regions are associated with different directions of navigation and wherein said process further comprises audibly rendering a present location in said menu structure as a result of said navigating.

22. The one or more computing device readable media as recited in Claim 20, wherein said executing said operation associated with said region comprises rendering an audible message.

23. The one or more computing device readable media as recited in Claim 22, wherein said audible message is an instruction directing a user to draw a second graphic element on said surface.

24. The one or more computing device readable media as recited in Claim 20, wherein said executing said operation associated with said region comprises executing an action.

25. The one or more computing device readable media as recited in Claim 20, wherein said user interaction comprises said writing instrument tapping said region.

26. The one or more computing device readable media as recited in Claim 20, wherein said user interaction comprises said writing instrument contacting said region and remaining in contact with said region for a predetermined period of time.

27. The one or more computing device readable media as recited in Claim 20, wherein said plurality of regions comprises four regions, wherein each region of said plurality of regions is located in a different quadrant proximate said first graphic element, wherein each region is associated with a different operation.
